# EUROPEAN PATENT SPECIFICATION

(11) **EP 2 135 423 B1**
(45) Date of publication and mention of the grant of the patent: **28.09.2016**
(21) Application number: 07727515.4
(22) Date of filing: 29.03.2007
(51) Int. Cl.: H04L 29/06

(54) **METHOD AND APPARATUS FOR USE IN A COMMUNICATIONS NETWORK**
VERFAHREN UND VORRICHTUNG ZUR VERWENDUNG IN EINEM KOMMUNIKATIONSNETZ
PROCÉDÉ ET APPAREIL DESTINÉS À ÊTRE UTILISÉS DANS UN RÉSEAU DE COMMUNICATIONS

(43) Date of publication of application: 23.12.2009
(73) Proprietor: Telefonaktiebolaget LM Ericsson (publ), 164 83 Stockholm (SE)
(72) Inventor: ALBERTSSON, Henrik, S-118 24 Stockholm (SE); LINDGREN, Anders, S-125 74 Älvsjö (SE); LINDGREN, Hans, S-125 43 Älvsjö (SE); HOLM, Jan, 803 10 Gävle (SE); BOBERG, Christer, 137 55 Tungelsta (SE)
(74) Representative: Ericsson
(86) International application number: PCT/EP2007/053043
(87) International publication number: WO 2008/119378

(56) References cited:
- WO-A-02/01786
- WO-A1-02/091786

## Description

### Technical field

The present invention relates to a method and apparatus for use in a communications network, for example a Universal Mobile Telecommunications System having an IP Multimedia Subsystem.

### Background

IP Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

The UMTS (Universal Mobile Telecommunications System) is a third generation wireless system designed to provide higher data rates and enhanced services to subscribers. UMTS is a successor to the Global System for Mobile Communications (GSM), with an important evolutionary step between GSM and UMTS being the General Packet Radio Service (GPRS). GPRS introduces packet switching into the GSM core network and allows direct access to packet data networks (PDNs). This enables high-data rate packets switch transmissions well beyond the 64 kbps limit of ISDN through the GSM call network, which is a necessity for UMTS data transmission rates of up to 2 Mbps. UMTS is standardised by the 3^{rd} Generation Partnership Project (3GPP) which is a conglomeration of regional standards bodies such as the European Telecommunication Standards Institute (ETSI), the Association of Radio Industry Businesses (ARIB) and others. See 3GPP TS 23.002 for more details.

The UMTS architecture includes a subsystem known as the IP Multimedia Subsystem (IMS) for supporting traditional telephony as well as new IP multimedia services (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS is able to connect to both PSTN/ISDN (Public Switched Telephone Network/Integrated Services Digital Network) as well as the Internet.

The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. The 3GPP has chosen SIP for signalling between a User Equipment (UE) and the IMS as well as between the components within the IMS.

Specific details of the operation of the UMTS communications network and of the various components within such a network can be found from the Technical Specifications for UMTS that are available from http://www.3gpp.org. Further details of the use of SIP within UMTS can be found from the 3GPP Technical Specification TS 24.228 V5.8.0 (2004-03).

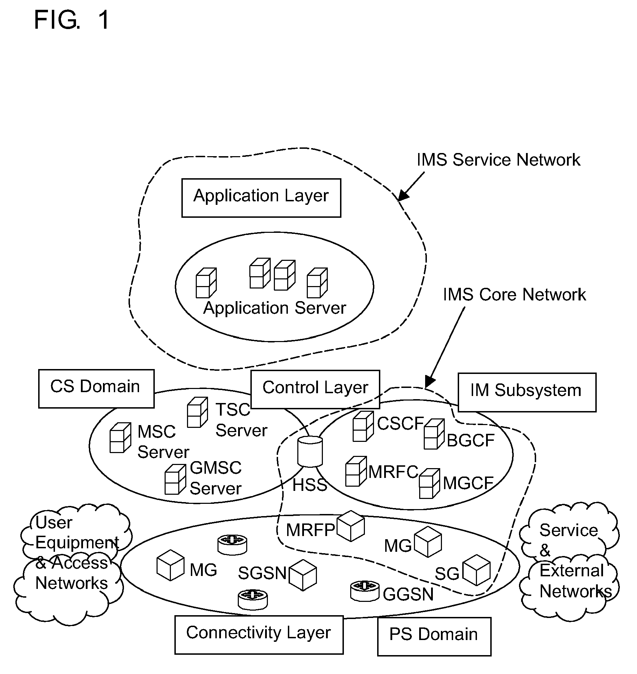

Figure 1 of the accompanying drawings illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

A user registers with the IMS using the specified SIP REGISTER method. This is a mechanism for attaching to the IMS and announcing to the IMS the address at which a SIP user identity can be reached. In 3GPP, when a SIP terminal performs a registration, the IMS authenticates the user, and allocates a S-CSCF to that user from the set of available S-CSCFs. Whilst the criteria for allocating S-CSCFs is not specified by 3GPP, these may include load sharing and service requirements. It is noted that the allocation of an S-CSCF is key to controlling (and charging for) user access to IMS-based services. Operators may provide a mechanism for preventing direct user-to-user SIP sessions which would otherwise bypass the S-CSCF.

During the registration process, it is the responsibility of the I-CSCF to select an S-CSCF if a S-CSCF is not already selected. The I-CSCF receives the required S-CSCF capabilities from the home network's Home Subscriber Server (HSS), and selects an appropriate S-CSCF based on the received capabilities. [It is noted that S-CSCF allocation is also carried out for a user by the I-CSCF in the case where the user is called by another party, and the user is not currently allocated an S-CSCF.] When a registered user subsequently sends a session request to the IMS, the P-CSCF is able to forward the request to the selected S-CSCF based on information received from the S-CSCF during the registration process.

Within the IMS service network, Application Servers (ASs) are provided for implementing IMS service functionality. Application Servers provide services to end-users in an IMS system, and may be connected either as end-points over the 3GPP defined Mr interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment. Different IFCs may be applied to different call cases. The IFCs are received by the S-CSCF from an HSS during the IMS registration procedure as part of a user's User Profile. Certain Application Servers will perform actions dependent upon subscriber identities (either the called or calling subscriber, whichever is "owned" by the network controlling the Application Server). For example, in the case of call forwarding, the appropriate (terminating) application server will determine the new terminating party to which a call to a given subscriber will be forwarded. In the case that an IFC indicates that a SIP message received at the S-CSCF should be forwarded to a particular SIP AS, that AS is added into the message path. Once the SIP message is returned by the AS to the S-CSCF, it is forwarded on towards its final destination, or forwarded to another AS if this is indicated in the IFCs.

The applicant has appreciated the following problem with the situation as it is currently specified.

IMS is a solution full with possibilities for new types of services with a large range of flexibility in deployment. However, this flexibility also leads to an increased complexity in the system, especially as it is designed to host multiple types of applications.

One area that has been explored to a limited extent is the technology and solutions required in order to address situations that may occur when a node goes down or is restarted.

The basic problem is that there is no existing generic solution to inform an IMS client that a server, for example, has been restarted, and hence that the client needs to log in again or needs to recreate an ongoing session.

This is particularly important for services such as presence where a subscription can exist for a long period of time and where such a failure in the system will not be known by the client until it tries to re-subscribe. The general desire is also to increase the expiry times as much as possible to improve performance in the network.

It is desirable to address the above-identified issue.

WO 02/091786 discloses an arrangement in which a P-CSCF receives a SIP NOTIFY message from a S-CSCF following an event at the S-CSCF, forwards the SIP NOTIFY message to a UE, and the UE performs a re-registration procedure following receipt of the SIP NOTIFY message.

### Summary

According to a first aspect of the present invention there is provided a method according to claim 1. Also disclosed herein is a method for use in a Universal Mobile Telecommunications System network comprising an IP Multimedia Subsystem, the method being performed at an apparatus in communication with a first node of the network and a second node of the network, and the method comprising receiving node status information relating to the first node which indicates an occurrence of an event associated with the first node, determining the existence of a network association established between the first node and the second node that would be adversely affected by the occurrence of the event, and causing the network association to be terminated, thereby allowing a new network association between the first and second nodes to be established in its place.

The method may comprise sending a message to the second node which indicates that the association is to be terminated.

The determination may be made at least partly by the second node.

The method may comprise sending a message to the second node comprising information relating to the first node, and using the first node information at the second node to determine the existence of a network association between the first and second nodes that would be affected by the occurrence of the event.

The message may be a SIP Multicast message, such as a SIP MESSAGE Request, sent to the second and other nodes of the network.

The first node information may comprise contact information for the first node.

The method may comprise using a contact header of the message at least in part to make the determination.

The first node information may comprise the SIP Uniform Resource Identifier, URI, of the first node.

The method may comprise causing a timing of the re-establishment of the network association between the first and second nodes to be determined at least partly on a random basis, thereby easing system load where a number of network associations relating to other nodes of the network are being re-established with the first node in view of the event occurrence.

The method may comprise sending a time window to the second node, and causing at least the starting of the re-establishment within the time window.

The event may be one that causes at least partial loss of information required to maintain the network association.

The event may relate to at least a partial failure of the second node.

The event may relate to at least a partial unavailability of the second node.

The event may relate to the restarting of the second node.

The network association may comprise a communication session between the first and second node.

The message may be a SIP BYE message.

The network association may comprise a subscription between the first and second node.

The message may be a final SIP NOTIFY message.

The network association may comprise a Security Association between the first and second node.

The network association may comprise a PDP context between the first and second node

The method may comprise making the determination with reference to route information.

The method may comprise making the determination on the basis of information stored locally at the node performing the method.

The first node may comprise an Application Server.

The first node may comprise a Serving Call Session Control Function.

The method may be performed at a Proxy Call Session Control Function.

The first node may comprise a Proxy Call Session Control Function.

The method may be performed at a Gateway GPRS Support Node.

The method may be performed at the second node.

The node status information may be received in a Session Initiation Protocol, SIP, Request.

The SIP Request may comprise a Request Uniform Resource Identifier, or Request-URI, which identifies the SIP Request as comprising node status information and/or which identifies the intended recipients of the node status information.

The method may comprise determining the intended recipients from the received Request URI.

The method may comprise forwarding the status information to the determined recipients.

The method may comprise using the status information at the receiving node if the receiving node is determined to be one of the intended recipients.

The method may comprise referring to an Initial Filter Criteria associated with the Request URI to determine the intended recipients.

The method may comprise referring to a Dynamic Name Server to determine the intended recipients from the Request URI.

The method may comprise determining the intended recipients in dependence upon a previously-received SIP SUBSCRIBE Request.

The SIP Request may be a SIP PUBLISH Request.

The method may comprise using the time to live information from the SIP PUBLISH Request to infer further information about the node status.

The SIP Request may be a SIP MESSAGE Request.

The method may comprise storing the node status relating to those nodes identified by the SIP Request URI.

According to a second aspect of the present invention there is provided an apparatus according to claim 13. Also disclosed herein is an apparatus for use in a Universal Mobile Telecommunications System network comprising an IP Multimedia Subsystem, the apparatus comprising means for receiving node status information relating to a first node of the network which indicates an occurrence of an event associated with the first node, means for determining the existence of a network association established between the first node and a second node of the network that would be adversely affected by the occurrence of the event, and means for causing the network association to be terminated, thereby allowing a new network association between the first and second nodes to be established in its place.

According to a third aspect of the present invention there is provided a program for controlling an apparatus to perform a method according to the first aspect of the present invention or which, when loaded into an apparatus, causes the apparatus to become an apparatus according to the second aspect of the present invention. The program may be carried on a carrier medium. The carrier medium may be a storage medium. The carrier medium may be a transmission medium.

Also disclosed herein is an apparatus programmed by a program according to the third aspect of the present invention.

According to a fifth aspect of the present invention there is provided a storage medium containing a program according to the third aspect of the present invention.

### Brief description of the drawings

Figure 1, discussed hereinbefore, illustrates schematically the integration of an IP Multimedia Subsystem into a 3G mobile communications system;
Figure 2 is a block diagram for use in providing an overview of an embodiment of the present invention; and
Figures 3 and 4 are block diagrams for use in illustrating a first example embodying the present invention.

### Detailed description

An embodiment of the present invention combines a mechanism for distributing node status information and the fact that some network nodes (for example, a P-CSCF) hold information concerning those client nodes (for example, UEs) that hold a session to a particular node (for example, an Application Server). By this, the P-CSCF is able to reset the session between the client and the node when it detects that the node has become unavailable, for example due to a temporary failure.

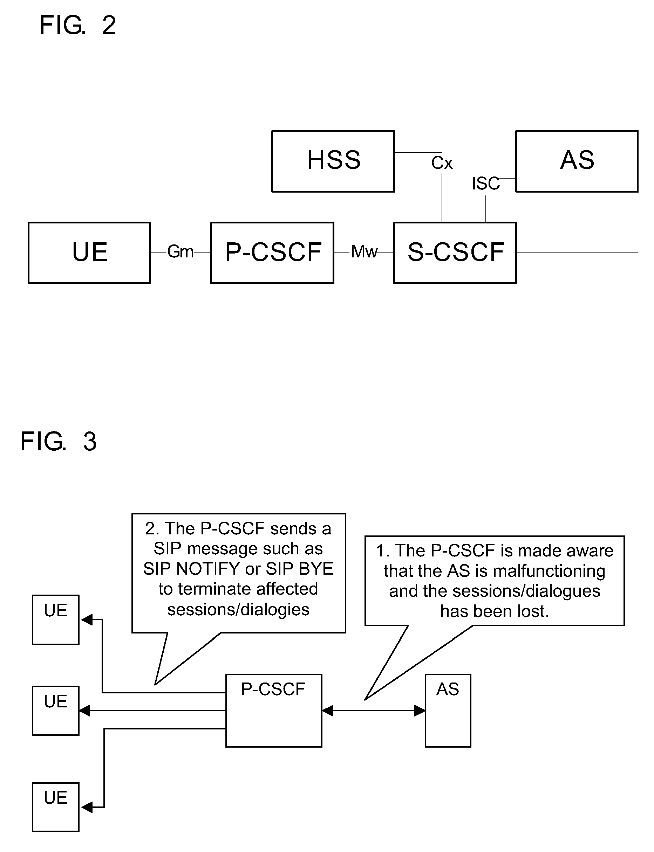

In the example illustrated in Figure 2, the P-CSCF, S-CSCF and AS nodes are each included in the distribution of status information from these nodes. At regular intervals (or other intervals determined by the particular method used) the nodes would distribute status information that may include information about the node restarting, and so on. More information on this, and a suitable mechanism for distributing node status information in an embodiment of the present invention is described in our co-pending PCT patent application no. [agent's ref P54319WO], whose whole content is hereby incorporated herein by reference.

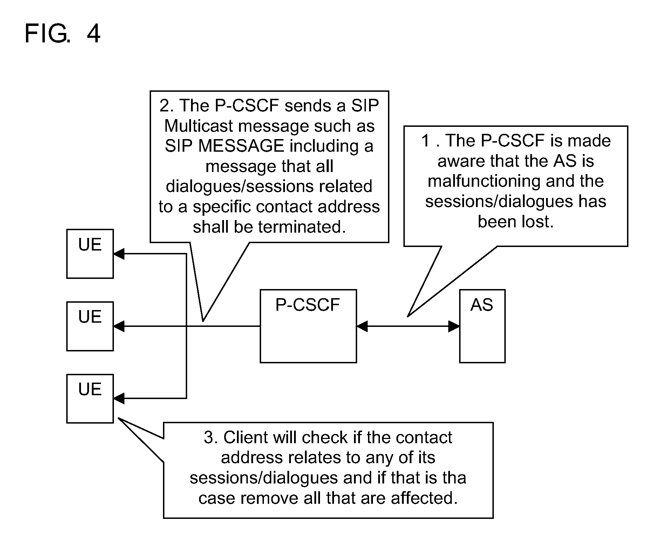

A first specific example will now be described with reference to Figures 3 and 4. The first example relates to a scenario where an Application Server has been forced, for some reason, to undergo a restart.

In the case of a failure of the Application Server, for example resulting in a restart, there might be many UEs with "hanging" sessions/dialogues, still assuming they are connected to the AS. However, since the AS has restarted it has lost all its session data.

In order to reset the sessions hanging in the UEs, the AS includes status information indicating that it has been restarted in its status information message (step 1 of Figure 3), which is received by the P-CSCF.

Part of the normal functionality of the P-CSCF is to hold information about all active sessions/dialogues. It can now loop through this information in order to find all sessions/dialogues to the affected AS. The P-CSCF has knowledge about the route information, so by checking the route information for all established sessions/dialogues it is able to detect which ones are affected by the restarted/malfunctioning node.

Once the P-CSCF has found any sessions to the restarted AS it sends a SIP message to the UEs in order to reset the affected sessions (step 2 of Figure 3). Also, the P-CSCF marks as invalid its own dialogs involving the restarting AS, and clears them to free memory if required.

One option is for the P-CSCF to use a proper SIP method such as a final SIP NOTIFY to terminate an established subscription, or a SIP BYE to terminate an established session. This is what is illustrated in Figure 3.

An alternative is to use SIP Multicast to inform all clients about the fact that the AS node has restarted. This is illustrated in Figure 4. The Multicast message (such as SIP MESSAGE) will then include the contact information about the restarted node so that the client can determine if the restarted node affects that clients established dialogues/sessions or not. Where there is a proxy node between the P-CSCF and the target node (included in the contact information), the routing information must be known by the terminal, which is normally not the case. But in the case where the restarting node is an AS to where the session/dialogue is established, the client can know by way of the contact header.

In the first example, the restart of an Application Server serves as the example of how a mechanism according to an embodiment of the present invention can be triggered. However, the invention is not limited to this.

A second example will now be described. The second example relates to a scenario where an S-CSCF has been forced, for some reason, to undergo a restart.

In the case of a failure of the S-CSCF, for example resulting in a restart, there might be many UEs with registrations that are no longer valid.

In such a situation, the P-CSCF notifies the UEs that they should register again.

The P-CSCF summarizes the information. It sends one or several SIP requests outside a dialog, for example a MESSAGE. A single request could be sent if a multicast mechanism is used. In one example, the SIP request contains the SIP URI (Uniform Resource Identifier) of the S-CSCF that has failed, and a time window. The UE has information concerning the originating S-CSCF from the Service-Route header from the registration procedure. The UE can compare the S-CSCF name from the received SIP request with the S-CSCF from the Service-Route. If they match, the affected UEs should register again. A UE should use a random value up to the time window to spread the load on the system for the registrations as a result of this request.

Also, the P-CSCF marks as invalid its own dialogs involving the restarting S-CSCF, and clears them to free memory if required.

A third example will now be described. The third example relates to a scenario where a P-CSCF has been forced, for some reason, to undergo a restart.

In the case of a failure of the P-CSCF, for example resulting in a restart, there might be many UEs with registrations that are no longer valid, and also lost security associations.

In a case where the GGSN (Gateway GPRS Support Node) has a vertical interface, it is able to recognize that the P-CSCF has restarted.

The GGSN could then deactivate all affected PDP (Packet Data Protocol) contexts. As an alternative, a new multicast or broadcast message could be defined to reduce the load on the system. This new message should then instruct all affected UEs to register again to the system.

On a general level, if a SIP Node receives information about another SIP Node that it has a connection to via a SIP dialog, but is not a P-CSCF, it does not need to inform the UEs as the P-CSCF (in the first and second examples above) or GGSN (in the third example above) will take care of informing them, it can use the Node state information to mark the SIP dialogs involving the restarted node as invalid and clear them to free memory if needed. If all SIP nodes involved in SIP dialogs acts like this, the use of memory in a network's SIP nodes will be more efficient.

An embodiment of the present invention enables a way for the network to reset "hanging" SIP sessions. In this way, the overall system behaviour, as well as the usability of the system, will improve, and the impact of a temporary failure in a node will be reduced. It also makes it possible to reduce the robustness requirements on different ASs in the network, which reduces the overall cost.

It will be appreciated that operation of one or more of the above-described components can be controlled by a program operating on the device or apparatus. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

It will also be appreciated by the person of skill in the art that various modifications may be made to the above-described embodiments without departing from the scope of the present invention as defined by the appended claims. In particular, it will be appreciated that, although described in relation to a Universal Mobile Telecommunications System having an IP Multimedia Subsystem, the present invention is also applicable to other types of network.

## Claims

1. A method in a communication network comprising an IP Multimedia Subsystem, the method being performed at an apparatus in communication with a first node of the network and a second node of the network, and the method comprising receiving node status information relating to the first node which indicates an occurrence of an event associated with the first node, and being **characterised by**
determining the existence of a network association established between the first node and the second node that would be adversely affected by the occurrence of the event, wherein the determination is done by the second node with reference to route information and/or making the determination on the basis of information stored locally, and
sending a message to the second node, causing the network association to be terminated, and informing that a new association between the first and the second node needs to be established in its place.

2. A method as claimed in claim 1, comprising sending a message to the second node which indicates that the association is to be terminated.

3. A method as claimed in claim 1 or 2, comprising sending a message to the second node comprising information relating to the first node, and using the first node information at the second node to determine the existence of a network association between the first and second nodes that would be affected by the occurrence of the event.

4. A method as claimed in claim 3, wherein the message is a SIP Multicast message, such as a SIP MESSAGE Request, sent to the second and other nodes of the network; and/or wherein the first node information comprises contact information for the first node; and/or comprising using a contact header of the message at least in part to make the determination; and/or wherein the first node information comprises the SIP Uniform Resource Identifier, URI, of the first node.

5. A method as claimed in any preceding claim, comprising causing a timing of the re-establishment of the network association between the first and second nodes to be determined at least partly on a random basis, thereby easing system load where a number of network associations relating to other nodes of the network are being re-established with the first node in view of the event occurrence, and optionally comprising: sending a time window to the second node and causing at least the starting of the re-establishment within the time window.

6. A method as claimed in any preceding claim, wherein:
the event is one that causes at least partial loss of information required to maintain the network association, and/or
the event relates to at least a partial failure of the first or second node; and/or
the event relates to an at least partial unavailability of the first or second node; and/or
the event relates to the restarting of the first or second node.

7. A method as claimed in any preceding claim, wherein:
the network association comprises a communication session between the first and second node, and, when dependent on claim 0, the message is optionally a SIP BYE message; and/or
the network association comprises a subscription between the first and second node, and, when dependent on claim 0, the message is optionally a final SIP NOTIFY message; and/or
the network association comprises a Security Association between the first and second node; and/or
the network association comprises a PDP context between the first and second node.

8. A method as claimed in any preceding claim, wherein:
the first node comprises an Application Server; and/or
the first node comprises a Serving Call Session Control Function; and/or
either the method is performed at a Proxy Call Session Control Function or the first node comprises a Proxy Call Session Control Function, and in the case where the first node comprises a Proxy Call Session Control Function, the method is optionally performed at a Gateway GPRS Support Node; and/or
the method is performed at the second node.

9. A method as claimed in any preceding claim, wherein the node status information is received in a Session Initiation Protocol, SIP, Request, where:
the SIP Request is optionally a SIP PUBLISH Request, and optionally comprising using the time to live information from the SIP PUBLISH Request to infer further information about the node status; or
the SIP Request is optionally a SIP MESSAGE Request.

10. A method as claimed in claim 9, wherein the SIP Request comprises a Request Uniform Resource Identifier, or Request-URI, which identifies the SIP Request as comprising node status information and/or which identifies the intended recipients of the node status information, and optionally comprising storing the node status relating to those nodes identified by the SIP Request URI.

11. A method as claimed in claim 10, comprising determining the intended recipients from the received Request URI, and optionally forwarding the status information to the determined recipients and/or using the status information at the receiving node if the receiving node is determined to be one of the intended recipients.

12. A method as claimed in claim 11, comprising referring to an Initial Filter Criteria associated with the Request URI to determine the intended recipients or referring to a Dynamic Name Server to determine the intended recipients from the Request URI or determining the intended recipients in dependence upon a previously-received SIP SUBSCRIBE Request.

13. An apparatus for use in a communication network comprising an IP Multimedia Subsystem, the apparatus comprising means for receiving node status information relating to a first node of the network which indicates an occurrence of an event associated with the first node, and being **characterised by**
comprising means for determining the existence of a network association established between the first node and a second node of the network that would be adversely affected by the occurrence of the event, wherein the determination is done by the second node with reference to route information and/or making the determination on the basis of information stored locally, and
means for sending a message to the second node, causing the network association to be terminated, and informing that a new association between the first and the second node needs to be established in its place.

14. A program for controlling an apparatus, wherein when the program is executed in the apparatus it causes the apparatus to perform a method as claimed in any one of claims 1 to 12, the program being carried on a carrier medium such as a storage medium or a transmission medium.

## Patentansprüche

1. Verfahren in einem Kommunikationsnetz, das ein IP-Multimedia-Subsystem umfasst, wobei das Verfahren an einer Vorrichtung in Kommunikation mit einem ersten Knoten des Netzes und einem zweiten Knoten des Netzes durchgeführt wird, und das Verfahren ein Empfangen von Knotenstatusinformationen in Bezug auf den ersten Knoten umfasst, die ein Eintreten eines Ereignisses anzeigen, das mit dem ersten Knoten assoziiert ist, und **gekennzeichnet ist durch**:
Bestimmen des Bestehens einer Netzassoziation, die zwischen dem ersten Knoten und dem zweiten Knoten hergestellt ist und die **durch** das Eintreten des Ereignis beeinträchtigt würde, wobei die Bestimmung durch den zweiten Knoten unter Bezugnahme auf Leitweginformationen erfolgt, und/oder die Bestimmung auf der Basis von lokal gespeicherten Informationen durchgeführt wird, und
Senden einer Nachricht an den zweiten Knoten, die bewirkt, dass die Netzassoziation beendet wird, und Informieren, dass eine neue Assoziation zwischen dem ersten und dem zweiten Knoten an ihrer Stelle hergestellt werden soll.

2. Verfahren nach Anspruch 1, umfassend ein Senden einer Nachricht an den zweiten Knoten, die anzeigt, dass die Assoziation beendet werden soll.

3. Verfahren nach Anspruch 1 oder 2, umfassend ein Senden einer Nachricht an den zweiten Knoten, welche Informationen in Bezug auf den ersten Knoten umfasst, und Verwenden der Informationen über den ersten Knoten am zweiten Knoten, um das Bestehen einer Netzassoziation zwischen den ersten und zweiten Knoten zu bestimmen, die durch das Eintreten des Ereignisses beeinträchtigt würde.

4. Verfahren nach Anspruch 3, wobei die Nachricht eine SIP-Multicast-Nachricht, wie beispielsweise eine SIP MESSAGE-Anforderung, ist, die an den zweiten und andere Knoten des Netzes gesendet wird; und/oder wobei die Informationen über den ersten Knoten Kontaktinformationen für den ersten Knoten umfassen; und/oder umfassend ein wenigstens teilweises Verwenden eines Kontakt-Headers der Nachricht zum Durchführen der Bestimmung; und/oder wobei die Informationen über den ersten Knoten den SIP-URI (Uniform Resource Identifier) des ersten Knotens umfassen.

5. Verfahren nach einem der vorhergehenden Ansprüche, umfassend ein Bewirken, dass eine Zeitgabe der Wiederherstellung der Netzassoziation zwischen den ersten und zweiten Knoten wenigstens teilweise auf einer Zufallsbasis bestimmt wird, um dadurch Systemlast wegzunehmen, wobei eine Anzahl von Netzassoziationen in Bezug auf andere Knoten des Netzes mit dem ersten Knoten in Anbetracht des Eintretens des Ereignisses widerhergestellt wird, und optional umfassend: Senden eines Zeitfensters an den zweiten Knoten und Bewirken wenigstens des Startens der Wiederherstellung innerhalb des Zeitfensters.

6. Verfahren nach einem der vorhergehenden Ansprüche, wobei:
das Ereignis eines ist, das wenigstens teilweisen Verlust von Informationen bewirkt, die zum Aufrechterhalten der Netzassoziation erforderlich sind; und/oder
das Ereignis wenigstens einen Teilausfall des ersten oder zweiten Knotens betrifft; und/oder
das Ereignis eine wenigstens teilweise Nichtverfügbarkeit des ersten oder zweiten Knotens betrifft; und/oder
das Ereignis das Neustarten des ersten oder zweiten Knotens betrifft.

7. Verfahren nach einem der vorhergehenden Ansprüche, wobei:
die Netzassoziation eine Kommunikationssitzung zwischen dem ersten und zweiten Knoten umfasst und, wenn abhängig von Anspruch 0, die Nachricht optional eine SIP BYE-Nachricht ist; und/oder
die Netzassoziation eine Subskription zwischen dem ersten und zweiten Knoten umfasst und, wenn abhängig von Anspruch 0, die Nachricht optional eine abschließende SIP NOTIFY-Nachricht ist; und/oder
die Netzassoziation eine Sicherheitsvereinbarung zwischen dem ersten und zweiten Knoten umfasst; und/oder
die Netzassoziation einen PDP-Kontext zwischen dem ersten und zweiten Knoten umfasst.

8. Verfahren nach einem der vorhergehenden Ansprüche, wobei:
der erste Knoten einen Anwendungsserver umfasst; und/oder
der erste Knoten eine versorgende Rufsitzungssteuerfunktion umfasst; und/oder
entweder das Verfahren an einer Proxy-Rufsitzungssteuerfunktion durchgeführt wird oder der erste Knoten eine Proxy-Rufsitzungssteuerfunktion umfasst, und das Verfahren, falls der erste Knoten eine Proxy-Rufsitzungssteuerfunktion umfasst, optional an einem Gateway-GPRS-Unterstützungsknoten durchgeführt wird; und/oder
das Verfahren am zweiten Knoten durchgeführt wird.

9. Verfahren nach einem der vorhergehenden Ansprüche, wobei die Knotenstatusinformationen in einer Sitzungseinleitungsprotokoll, SIP,-Anforderung empfangen werden, wobei:
die SIP-Anforderung optional eine SIP PUBLISH-Anforderung ist, und optional umfassend ein Verwenden der Lebensdauer-Informationen aus der SIP PUBLISH-Anforderung zum Ableiten weiterer Informationen über den Knotenstatus; oder
die SIP-Anforderung optional eine SIP MESSAGE-Anforderung ist.

10. Verfahren nach Anspruch 9, wobei die SIP-Anforderung einen Anforderungs-URI (Uniform Resource Identifier) umfasst, der die SIP-Anforderung als Knotenstatusinformationen umfassend identifiziert, und/oder der die beabsichtigten Empfänger der Knotenstatusinformationen identifiziert, und optional umfassend ein Speichern des Knotenstatus in Bezug auf jene Knoten, die durch den SIP-Anforderungs-URI identifiziert werden.

11. Verfahren nach Anspruch 10, umfassend en Bestimmen der beabsichtigten Empfänger aus dem empfangenen Anforderungs-URI, und optionales Weiterleiten der Statusinformationen an die bestimmten Empfänger und/oder Verwenden der Statusinformationen am empfangenden Knoten, wenn bestimmt wird, dass der empfangende Knoten einer der beabsichtigten Empfänger ist.

12. Verfahren nach Anspruch 11, umfassend ein Bezugnehmen auf anfängliche Filterkriterien, die mit dem Anforderungs-URI assoziiert sind, um die beabsichtigten Empfänger zu bestimmen, oder Bezugnehmen auf einen dynamischen Namensserver, um die beabsichtigten Empfänger aus dem Anforderungs-URI zu bestimmen, oder Bestimmen der beabsichtigten Empfänger in Abhängigkeit von einer früher empfangenen SIP SUBSCRIBE-Nachricht.

13. Vorrichtung zur Verwendung in einem Kommunikationsnetz, das ein IP-Multimedia-Subsystem umfasst, wobei die Vorrichtung Mittel zum Empfangen von Knotenstatusinformationen in Bezug auf einen ersten Knoten des Netzes umfasst, die ein Eintreten eines Ereignisses anzeigen, das mit dem ersten Knoten assoziiert ist, und **gekennzeichnet dadurch, dass** sie umfasst:
Mittel zum Bestimmen des Bestehens einer Netzassoziation, die zwischen dem ersten Knoten und einem zweiten Knoten des Netzes hergestellt ist und die durch das Eintreten des Ereignis beeinträchtigt würde, wobei die Bestimmung durch den zweiten Knoten unter Bezugnahme auf Leitweginformationen erfolgt, und/oder die Bestimmung auf der Basis von lokal gespeicherten Informationen durchgeführt wird, und Mittel zum Senden einer Nachricht an den zweiten Knoten, die bewirkt, dass die Netzassoziation beendet wird, und Informieren, dass eine neue Assoziation zwischen dem ersten und dem zweiten Knoten an ihrer Stelle hergestellt werden soll.

14. Programm zum Steuern einer Vorrichtung, wobei das Programm bei Ausführung in der Vorrichtung die Vorrichtung veranlasst, ein Verfahren nach einem der Ansprüche 1 bis 12 durchzuführen, wobei das Programm auf einem Trägermedium, wie beispielsweise einem Speichermedium oder einem Übertragungsmedium, getragen wird.

## Revendications

1. Procédé dans un réseau de communication comprenant un sous-système multimédia IP, le procédé étant effectué à un appareil en communication avec un premier noeud du réseau et un deuxième noeud du réseau, et le procédé comprenant la réception d'informations de statut de noeud relatives au premier noeud indiquant une survenance d'un événement associé au premier noeud, et étant **caractérisé par** :
la détermination de l'existence d'une association de réseau établie entre le premier noeud et le deuxième noeud qui serait affectée défavorablement par la survenance de l'événement, dans lequel la détermination est effectuée par le deuxième noeud en référence à des informations d'acheminement et/ou l'exécution de la détermination sur la base d'informations mémorisées localement, et
l'envoi d'un message au deuxième noeud, provoquant la terminaison de l'association de réseau et informant qu'une nouvelle association entre le premier noeud et le deuxième noeud doit être établie à sa place.

2. Procédé selon la revendication 1, comprenant l'envoi d'un message au deuxième noeud indiquant que l'association doit être terminée.

3. Procédé selon la revendication 1 ou 2, comprenant l'envoi d'un message au deuxième noeud comprenant des informations relatives au premier noeud, et l'utilisation des informations de premier noeud au deuxième noeud pour déterminer l'existence d'une association de réseau entre le premier noeud et le deuxième noeud qui serait affectée par la survenance de l'événement.

4. Procédé selon la revendication 3, dans lequel le message est un message SIP Multicast, comme une demande SIP MESSAGE, envoyé au deuxième noeud et aux d'autres noeuds du réseau ; et/ou dans lequel les informations de premier noeud comprennent des informations de contact pour le premier noeud ; et/ou comprenant l'utilisation d'un en-tête de contact du message au moins en partie pour exécuter la détermination ; et/ou dans lequel les informations de premier noeud comprennent l'identifiant de ressource uniforme, URI, SIP du premier noeud.

5. Procédé selon l'une quelconque des revendications précédentes, comprenant l'étape consistant à amener un timing du réétablissement de l'association de réseau entre le premier noeud et le deuxième noeud à être déterminé au moins partiellement sur une base aléatoire, en soulageant de ce fait une charge de système où un nombre d'associations de réseau relatives à d'autres noeuds du réseau sont en cours de réétablissement avec le premier noeud en tenant compte de la survenance d'événement, et comprenant facultativement : l'envoi d'une fenêtre de temps au deuxième noeud et l'étape consistant à provoquer au moins le démarrage du réétablissement à l'intérieur de la fenêtre de temps.

6. Procédé selon l'une quelconque des revendications précédentes, dans lequel :
l'événement est un événement qui provoque une perte au moins partielle d'informations nécessaires pour maintenir l'association de réseau, et/ou
l'événement concerne une défaillance au moins partielle du premier noeud ou du deuxième noeud ; et/ou l'événement concerne une indisponibilité au moins partielle du premier noeud ou du deuxième noeud ; et/ou
l'événement concerne le redémarrage du premier noeud ou du deuxième noeud.

7. Procédé selon l'une quelconque des revendications précédentes, dans lequel :
l'association de réseau comprend une session de communication entre le premier noeud et le deuxième noeud, et, lorsqu'elle dépend de la revendication 0, le message est facultativement un message SIP BYE ; et/ou
l'association de réseau comprend un abonnement entre le premier noeud et le deuxième noeud, et, lorsqu'elle dépend de la revendication 0, le message est facultativement un message SIP NOTIFY final ; et/ou
l'association de réseau comprend une association de sécurité entre le premier noeud et le deuxième noeud ; et/ou
l'association de réseau comprend un contexte PDP entre le premier noeud et le deuxième noeud.

8. Procédé selon l'une quelconque des revendications précédentes, dans lequel :
le premier noeud comprend un serveur d'application ; et/ou
le premier noeud comprend une fonction de commande de session d'appel de desserte ; et/ou
le procédé est effectué à une fonction de commande de session d'appel proxy ou le premier noeud comprend une fonction de commande de session d'appel proxy, et, dans le cas où le premier noeud comprend une fonction de commande de session d'appel proxy, le procédé est facultativement effectué à un noeud de prise en charge de GPRS de passerelle ; et/ou
le procédé est effectué au deuxième noeud.

9. Procédé selon l'une quelconque des revendications précédentes, dans lequel les informations de statut de noeud sont reçues dans une demande de protocole d'ouverture de session, SIP, dans lequel :
la demande SIP est facultativement une demande SIP PUBLISH, et comprenant facultativement l'utilisation des informations de temps de vie de la demande SIP PUBLISH pour déduire d'autres informations concernant le statut de noeud ; ou
la demande SIP est facultativement une demande SIP MESSAGE.

10. Procédé selon la revendication 9, dans lequel la demande SIP comprend un identifiant de ressource uniforme, URI, de demande qui identifie la demande SIP comme comprenant des informations de statut de noeud et/ou qui identifie les destinataires prévus des informations de statut de noeud, et comprenant facultativement la mémorisation du statut de noeud relatif à ces noeuds identifiés par l'URI de demande SIP.

11. Procédé selon la revendication 10, comprenant la détermination des destinataires prévus à partir de l'URI de demande reçu, et facultativement le transfert des informations de statut aux destinataires déterminés et/ou l'utilisation des informations de statut au noeud de réception s'il est déterminé que le noeud de réception est l'un des destinataires prévus.

12. Procédé selon la revendication 11, comprenant la référence à un critère de filtre initial associé à l'URI de demande pour déterminer les destinataires prévus ou la référence à un serveur de nom dynamique pour déterminer les destinataires prévus à partir de l'URI de demande ou la détermination des destinataires prévus en fonction d'une demande SIP SUBSCRIBE précédemment reçue.

13. Appareil destiné à être utilisé dans un réseau de communication comprenant un sous-système multimédia IP, l'appareil comprenant des moyens pour effectuer la réception d'informations de statut de noeud relatives à un premier noeud du réseau indiquant une survenance d'un événement associé au premier noeud, et étant **caractérisé en ce qu'**il comprend des moyens pour effectuer :
la détermination de l'existence d'une association de réseau établie entre le premier noeud et un deuxième noeud du réseau qui serait affectée défavorablement par la survenance de l'événement, dans lequel la détermination est effectuée par le deuxième noeud en référence à des informations d'acheminement et/ou l'exécution de la détermination sur la base d'informations mémorisées localement, et
l'envoi d'un message au deuxième noeud, provoquant la terminaison de l'association de réseau et informant qu'une nouvelle association entre le premier noeud et le deuxième noeud doit être établie à sa place.

14. Programme pour commander un appareil, dans lequel, lorsque le programme est exécuté dans l'appareil, il amène l'appareil à effectuer un procédé selon l'une quelconque des revendications 1 à 12, le programme étant porté sur un support porteur comme un support de mémorisation ou un support de transmission.
